# EUROPEAN PATENT APPLICATION

(11) **EP 4 753 239 A1**
(43) Date of publication of application: **03.06.2026**
(21) Application number: 24865719.9
(22) Date of filing: 23.08.2024
(51) Int. Cl.: H04L 67/125, G06F 3/0484, G06F 3/16, H04B 17/309, H04R 1/08

(54) **ELECTRONIC DEVICE AND METHOD FOR CONTROLLING ELECTRONIC DEVICE**

(30) Priority: 12.09.2023 KR 20230121340
(71) Applicant: Samsung Electronics Co., Ltd., Suwon-si, Gyeonggi-do 16677 (KR)
(72) Inventor: CHAI, Changjoo, Suwon-si Gyeonggi-do 16677 (KR)
(74) Representative: Gulde & Partner
(86) International application number: PCT/KR2024/012646
(87) International publication number: WO 2025/058278

(57) **Abstract**

Provided are an electronic device and a method for controlling the electronic device. The electronic device includes: a communication unit; a display; a memory storing at least one instruction; and a processor that executes the at least one instruction. The processor is configured to: based on receiving, from a target device through the communicator, a signal including a registration request and context information indicating that a user is located near the target device, obtain information about a strength of the signal; based on the strength of the signal being greater than or equal to a preset threshold value, control the display to provide a user interface; and based on a user input to add the target device as a device constituting the IoT network being received via the user interface, register the target device as the device constituting the IoT network.

## Description

### BACKGROUND

### 1. Field

The disclosure relates to an electronic apparatus and a method for controlling the electronic apparatus, and more particularly, to an electronic apparatus that may register a target device as a device constituting an Internet of Things (IoT) network, and a method for controlling thereof.

### 2. Description of Related Art

Recently, technologies related to the Internet of Things (IoT) are developing rapidly. In particular, recently, there is an ongoing search for technologies for performing onboarding by a method which minimizes a user's inconvenience in a process of registering a device for constituting an IoT network, i.e., an onboarding process, and which is efficient.

According to a related art technology, if a target device which becomes a target of onboarding periodically broadcasts a signal (an advertisement packet), and a helper device which is a device that was already registered as a device for constituting an IoT network receives the signal from the target device, a procedure for identifying whether to proceed with onboarding may proceed, and the target device may be registered as a device for constituting an IoT network.

However, in the related art technology, in case a target device is not located in the same space (e.g.: in a home) as an electronic apparatus (e.g.: a case where the target device is located in a neighboring house), identification regarding whether to proceed with onboarding is requested to a user based on signals periodically broadcasted by the target device, and thus not only the user's inconvenience is caused, but also unnecessary power is consumed.

Also, in the related art technology, since a procedure for identifying whether to proceed with onboarding is complex and it is requested to the user to enter an input (e.g., select a button(s) on the target device), not only the user's inconvenience is caused, but also onboarding may fail even when the target device is located in the same space as an electronic apparatus if the user enters a wrong input (e.g., selects a wrong button).

### SUMMARY

The disclosure resolves the aforementioned problems of the related art technology, and provides an electronic apparatus that may perform a process of registering a target device as a device for constituting an Internet of Things (IoT) network efficiently and effectively, and a method for controlling thereof.

According to an aspect of an example embodiment of the disclosure, an electronic apparatus may include a communicator, a display, memory storing at least one instruction, and a processor configured to execute the at least one instruction, wherein the processor may be configured to: based on receiving, from a target device through the communicator, a signal including a registration request and context information indicating that a user is located near the target device, obtain information about a strength of the signal; based on the strength of the signal being greater than or equal to a predetermined threshold value, control the display to provide a user interface; and based on receiving a user input to add the target device as a device constituting the IoT network through the user interface, register the target device as the device constituting the IoT network.

In an embodiment, the processor may be configured to receive the signal from the target device based on the context information being obtained by the target device.

In an embodiment, the electronic apparatus may be registered in advance as the device constituting the IoT network.

In an embodiment, the processor may be configured to receive the signal from the target device based on at least one of detecting that the user is located near the target device at the target device or a user input for controlling the target device being received at the target device.

In an embodiment, the user input for controlling the target device being received at the target device may include at least one of a user input of inputting a button included in the target device being received, a voice command of the user being received through a microphone included in the target device, or a control command for controlling the target device being received from a remote control device for controlling the target device through a communicator included in the target device.

In an embodiment, the detecting that the user is located near the target device at the target device may include at least one of sensing information indicating an existence of the user being obtained through a sensor included in the target device or a sound indicating the existence of the user being received through a microphone included in the target device.

In an embodiment, the user interface may include at least one of information for identifying the target device, a guide message for inquiring about whether to add the target device as the device constituting the IoT network, and at least one UI element for the user to select whether to add the target device as the device constituting the IoT network.

According to an aspect of an example embodiment of the disclosure, a method for controlling an electronic apparatus may include: based on receiving, from a target device through the communicator, a signal including a registration request and context information indicating that a user is located near the target device, obtaining information about a strength of the signal; based on the strength of the signal being greater than or equal to a predetermined threshold value, controlling the display to provide a user interface; and based on receiving a user input to add the target device as a device constituting the IoT network through the user interface, registering the target device as the device constituting the IoT network.

In an embodiment, the receiving the signal may include receiving the signal from the target device based on the context information being obtained by the target device.

In an embodiment, the electronic apparatus may be registered in advance as the device constituting the IoT network.

In an embodiment, the receiving the signal may include receiving the signal based on at least one of detecting that the user is located near the target device at the target device or a user input for controlling the target device being received at the target device.

In an embodiment, the user input for controlling the target device being received at the target device may include at least one of a user input of inputting a button included in the target device being received, a voice command of the user being received through a microphone included in the target device, or a control command for controlling the target device being received from a remote control device for controlling the target device through a communicator included in the target device.

In an embodiment, the detecting that the user is located near the target device at the target device may include at least one of sensing information indicating an existence of the user being obtained through a sensor included in the target device or a sound indicating the existence of the user being received through a microphone included in the target device.

In an embodiment, the user interface may include at least one of information for identifying the target device, a guide message for inquiring about whether to add the target device as the device constituting the IoT network, and at least one UI element for the user to select whether to add the target device as the device constituting the IoT network.

According to an aspect of an example embodiment of the disclosure, a non-transitory computer-readable recording medium may store a program executable by at least one processor to perform: based on receiving, from a target device through the communicator, a signal including a registration request and context information indicating that a user is located near the target device, obtaining information about a strength of the signal; based on the strength of the signal being greater than or equal to a predetermined threshold value, controlling the display to provide a user interface; and based on receiving a user input to add the target device as a device constituting the IoT network through the user interface, registering the target device as the device constituting the IoT network.

### BRIEF DESCRIPTION OF DRAWINGS

FIG. 1 is a diagram illustrating an electronic apparatus and a target device according to one or more embodiments of the disclosure;
FIG. 2 is a flow chart illustrating a method for controlling an electronic apparatus according to one or more embodiments of the disclosure;
FIG. 3 is a diagram illustrating a user interface according to one or more embodiments of the disclosure;
FIG. 4 is a block diagram schematically illustrating a configuration of an electronic apparatus according to one or more embodiments of the disclosure; and
FIG. 5 is a block diagram illustrating in detail a configuration of an electronic apparatus according to one or more embodiments of the disclosure.

### DETAILED DESCRIPTION

Various modifications may be made to example embodiments of the disclosure, and there may be various types of embodiments. Accordingly, specific embodiments will be illustrated in drawings, and the embodiments will be described in detail in the detailed description of the disclosure. However, it should be noted that the various embodiments are not for limiting the scope of the disclosure to a specific embodiment, but they should be interpreted to include various modifications, equivalents, and/or alternatives of the embodiments of the disclosure. In addition, with respect to the detailed description of the drawings, similar components may be designated by similar reference numerals.

Also, in describing the disclosure, in case it is determined that detailed explanation of related known functions or features may unnecessarily confuse the gist of the disclosure, the detailed explanation will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Further, the terms used in the disclosure are used only to explain specific embodiments, and are not intended to limit the scope of the disclosure. Also, singular expressions include plural expressions, unless defined obviously differently in the context.

In addition, in the disclosure, expressions such as "have," "may have," "include," and "may include" denote the existence of such characteristics (e.g.: elements such as numbers, functions, operations, and components), and do not exclude the existence of additional characteristics.

Also, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

In addition, the expressions "first," "second," and the like used in the disclosure may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

In contrast, the description that one element (e.g.: a first element) is "directly coupled" or "directly connected" to another element (e.g.: a second element) may be interpreted to mean that still another element (e.g.: a third element) does not exist between the one element and the another element.

Also, the expression "configured to" used in the disclosure may be interchangeably used with other expressions such as "suitable for," "having the capacity to," "designed to," "adapted to," "made to," and "capable of," depending on cases. Meanwhile, the term "configured to" may not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g.: an embedded processor) for performing the corresponding operations, or a generic-purpose processor (e.g.: a central processing unit (CPU) or an application processor) that may perform the corresponding operations by executing one or more software programs stored in a memory device.

Also, in the embodiments of the disclosure, 'a module' or 'a unit' may perform at least one function or operation, and may be implemented as hardware or software, or as a combination of hardware and software. In addition, a plurality of 'modules' or 'units' may be integrated into at least one module and implemented as at least one processor, excluding 'a module' or 'a unit' that needs to be implemented as specific hardware.

Meanwhile, various elements and areas in the drawings are illustrated schematically. Accordingly, the technical idea of the disclosure is not limited by the relative sizes or intervals illustrated in the accompanying drawings.

Hereinafter, embodiments according to the disclosure will be described in detail with reference to the accompanying drawings to the extent that those having ordinary skill in the art to which the disclosure belongs may easily carry out the embodiments.

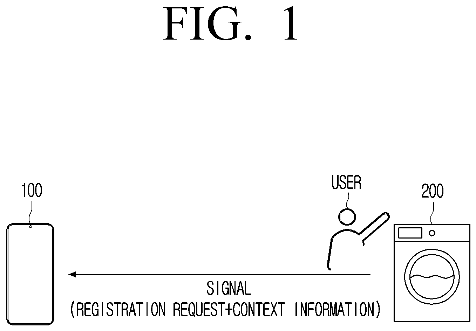

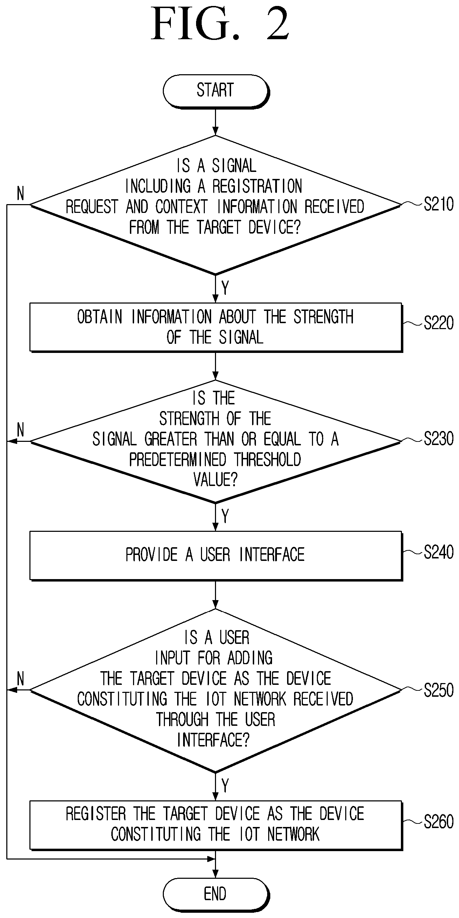

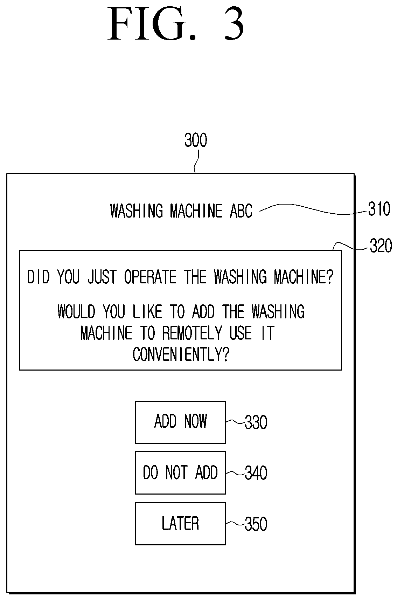

FIG. 1 is a diagram illustrating an electronic apparatus 100 and a target device 200 according to one or more embodiments of the disclosure, FIG. 2 is a flow chart illustrating a method for controlling an electronic apparatus 100 according to one or more embodiments of the disclosure, and FIG. 3 is a diagram illustrating a user interface according to one or more embodiments of the disclosure. Hereinafter, various embodiments of the disclosure will be described with reference to FIG. 1 to FIG. 3 together.

As illustrated in FIG. 1, a system according to one or more embodiments of the disclosure may include the electronic apparatus 100 and the target device 200.

'The electronic apparatus 100' refers to a device that may register the target device 200 as a device to be included in an IoT network, that is, as a device constituting an IoT network. Specifically, the electronic apparatus 100 may be a device that was registered in advance as a device constituting an IoT network, and identify if it is appropriate to register the target device 200 as a device constituting the IoT network, and register the target device 200 as a device constituting the IoT network based on a result of identification.

'A process of registering the target device 200 as a device constituting the IoT network' may be referred to as so-called 'onboarding,' and the electronic apparatus 100 may be described as a device that performs a role of 'a helper' in the sense that it is a device that helps an onboarding process of the target device 200.

'The target device 200' refers to a device that may be registered as a device constituting the IoT network. In other words, the target device 200 refers to a device which was not registered as a device constituting the IoT network, and which is a candidate device that has a possibility of being registered as a device constituting the IoT network. The term 'the target device 200' may be interchangeably used with terms such as 'an external device' or 'a candidate device,' etc.

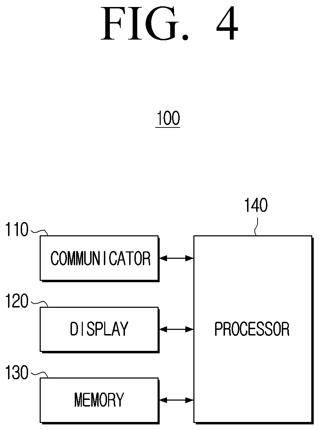

For example, the electronic apparatus 100 may be a device that includes a display (refer to FIG. 4, 120) and is easy to be registered as a device constituting the IoT network by a user, and the target device 200 may be a device that is relatively less easy to be registered as a device constituting the IoT network by a user. For example, the electronic apparatus 100 may include a smartphone, etc., and the target device 200 may include a refrigerator, a washing machine, an air conditioner, etc. However, there is no special limitation on the types of the electronic apparatus 100 and the target device 200.

As illustrated in FIG. 1, the user may be located near the target device 200, and the target device 200 may transmit a signal including a registration request and context information to the electronic apparatus 100. Here, 'the user' may be the user of the electronic apparatus 100 and the target device 200, but is not limited thereto. For example, a person who uses the same space as the user of the electronic apparatus 100 and the target device 200, such as a family member who was not registered as the user of the electronic apparatus 100 and the target device 200, may also fall under the user according to the disclosure.

Hereinafter, operations of a controlling method related to the target device 200 transmitting a signal including a registration request and context information to the electronic apparatus 100, and then the electronic apparatus 100 identifying whether to register the target device 200 as the device constituting the IoT network, and registering the target device 200 as the device constituting the IoT network will be explained with reference to FIG. 2 together.

Referring to FIG. 2, the electronic apparatus 100 may determine whether a signal including a registration request and context information from the target device 200 is received in S210. In the disclosure, a signal including a registration request and context information may simply be referred to as 'a signal' or 'a wireless signal,' and the term 'a signal' may also be referred to as 'an advertisement signal (packet),' etc. In particular, a signal may be a Wi-Fi or Bluetooth Low Energy (BLE) signal, but there is no special limitation on the types of a signal according to the disclosure.

Meanwhile, in the description below, explanation will be described based on the premise that a registration request and context information are included in one signal and received from the target device 200, but a registration request and context information may be received from the target device 200 while being included in separate signals.

A signal including a registration request and context information may be transmitted from the target device 200 based on the context information being obtained by the target device 200. Specifically, the target device 200 may not transmit a signal including a registration request and context information per predetermined cycle, but may include not only a registration request but also context information in a signal whenever context information is obtained, and transmit the signal to the electronic apparatus 100.

The target device 200 may broadcast a signal including a registration request and context information, and the electronic apparatus 100 may receive the signal from the target device 200. In an embodiment, the target device 200 may not only broadcast a signal, but also transmit a signal by various methods such as unicasting or multicasting, etc.

'A registration request' refers to a request for registering the target device 200 as a device constituting the IoT network, and may include identification information for the target device 200 and additional information for registering the target device 200 as a device constituting the IoT network.

'Context information' generally refers to information indicating that the user is located near the target device 200. Also, context information may include information indicating that an interaction between the target device 200 and the user occurred. The term 'context information' may be interchangeably used with one or more of various terms such as 'operation information,' 'state information,' etc. Meanwhile, how much distance is meant by 'near' may be determined according to a setting of a developer and/or the user.

The context information may be included in a signal transmitted from the target device 200 to the electronic apparatus 100 based on a user input for controlling the target device 200 being received at the target device 200. In other words, if the target device 200 operates as the user inputs a user input into the target device 200, the target device 200 may include the context information in a signal transmitted to the electronic apparatus 100 and transmit the signal to the electronic apparatus 100, and the electronic apparatus 100 may receive the signal including the context information from the target device 200.

According to one or more embodiments, the context information may be included in a signal transmitted from the target device 200 to the electronic apparatus 100 based on a user input of inputting a button included in the target device 200 being received.

For example, if the user pushes a power button, an operation start button, a play button, etc. included in the target device 200, the target device 200 may obtain context information based on the button input, and transmit a signal including a registration request and the context information to the electronic apparatus 100.

According to one or more embodiments, the context information may be included in a signal transmitted from the target device 200 to the electronic apparatus 100 based on a voice command of the user being received through a microphone included in the target device 200.

For example, if the user utters a voice command for controlling the operation of the target device 200, the target device 200 may obtain context information based on the utterance of the voice command, and transmit a signal including a registration request and the context information to the electronic apparatus 100.

According to one or more embodiments, the context information may be included in a signal transmitted from the target device 200 to the electronic apparatus 100 based on a control command for controlling the target device 200 being received from a remote control device for controlling the target device 200 through a communicator 110 included in the target device 200.

For example, in case the user turns on the power of a TV by using a remote control device, although the user did not directly input a button of the TV, in case the remote control device uses an infrared signal in particular, it may be identified that the user is controlling the TV near the TV. Accordingly, the target device 200 may obtain context information based on a control command being received from the remote control device, and transmit a signal including a registration request and the context information to the electronic apparatus 100.

Other than the above, in case an operation of the target device 200 based on the premise that the user is located near the target device 200 was performed such as a case where a voice command of the user was received through a microphone included in a remote control device and then transmitted to the target device 200, a case where an operation of opening or closing a door included in the target device 200 (e.g.: a door of a refrigerator, a clothing management device, a washing machine, a vehicle, etc.) was performed, and the like, context information may be obtained by the target device 200, and transmitted to the electronic apparatus 100.

The context information may be included in a signal transmitted from the target device 200 to the electronic apparatus 100 based on detecting that the user is located near the target device 200 at the target device 200. In other words, even if it is not a case where the user inputs a user input for controlling the target device 200 into the target device 200, if it is detected that the user is located near the target device 200, the target device 200 may include context information in a signal transmitted to the electronic apparatus 100 and transmit the signal to the electronic apparatus 100, and the electronic apparatus 100 may receive the signal including the context information from the target device 200.

According to one or more embodiments, the context information may be included in a signal transmitted from the target device 200 to the electronic apparatus 100 based on sensing information indicating the existence of the user being obtained through a sensor included in the target device 200.

For example, if sensing information indicating a movement of the user is obtained through a motion sensor included in the target device 200, or image data indicating the existence of the user is obtained through an image sensor included in the target device 200, the target device 200 may obtain context information based on the sensing information or the image data, and transmit a signal including a registration request and the context information to the electronic apparatus 100.

According to one or more embodiments, the context information may be included in a signal transmitted from the target device 200 to the electronic apparatus 100 based on a sound indicating the existence of the user being received through the microphone included in the target device 200. Here, the sound indicating the existence of the user may include not only a voice command for controlling the target device 200, but also a sound according to a general conversation of the user.

When the signal including the registration request and the context information is received in S210-Y, the electronic apparatus 100 may obtain information about a strength of the signal in S220. Here, the information about the strength of the signal may include a received signal strength indicator (RSSI) value.

Specifically, the electronic apparatus 100 may perform analog-to-digital conversion (ADC) for the signal received from the target device 200, and measure an energy strength of the signal by using frequency spectrum analysis, etc. The measured energy strength may be expressed as a value in a unit such as decibel (dB) or decibel milliwatt (dBm), etc.

As a distance between the electronic apparatus 100 and the target device 200 is farther, the RSSI value decreases, and as the distance between the electronic apparatus 100 and the target device 200 is closer, the RSSI value increases, and thus the electronic apparatus 100 may obtain information about the distance between the electronic apparatus 100 and the target device 200 based on the RSSI value.

Specifically, when the RSSI value is obtained, the electronic apparatus 100 may obtain information about the distance between the electronic apparatus 100 and the target device 200 by converting the RSSI value into a distance by using a predefined distance estimation model. In other words, the electronic apparatus 100 may identify whether the target device 200 is located within a close distance (a threshold distance) from the electronic apparatus 100 based on the RSSI value, and based thereon, identify whether the target device 200 is located in the same space as the electronic apparatus 100.

The electronic apparatus 100 may identify whether the strength of the signal is greater than or equal to a predetermined threshold value in S230. If the strength of the signal is greater than or equal to the predetermined threshold value in S230-Y, the electronic apparatus 100 may provide a user interface in S240.

In an embodiment, if context information is included in a signal received from the target device 200, and the strength of the received signal is greater than or equal to the predetermined threshold value, the electronic apparatus 100 may identify that the target device 200 is in the same space as the electronic apparatus 100, and provide a user interface for identification of the user.

Here, 'the threshold value' is a value that may determine whether the target device 200 is located in the same space as the electronic apparatus 100, and it needs to be set as an appropriate value considering the fact that, if the value is set to be too low, the user interface is provided even when a signal is transmitted from the target device 200 not located in the same space as the electronic apparatus 100, and thus inconvenience of the user may be caused, and in if the value is set to be too high, the user interface is not provided even when a signal is transmitted from the target device 200 located in the same space as the electronic apparatus 100, and thus an IoT registration procedure cannot be performed. The threshold value may be changed according to the setting of the developer and/or the user.

The user interface (UI) according to the disclosure may include information for identifying the target device 200, a guide message for inquiring about whether to add the target device 200 as the device constituting the IoT network, and at least one UI element for the user to select whether to add the target device 200 as the device constituting the IoT network.

For example, as illustrated in FIG. 3, a user interface 300 may include information 310 indicating that the target device 200 is "a washing machine ABC" and a guide message 320 for inquiring about whether to add the target device 200 as the device constituting the IoT network such as "Did you just operate the washing machine? Would you like to add the washing machine to remotely use it conveniently?" As in the example in FIG. 3, the guide message 320 may include a message for identifying whether the target device 200 was operated.

Also, as illustrated in FIG. 3, the user interface 300 may include a plurality of UI elements 330, 340, 350 for allowing the user to select whether to add the target device 200 as the device constituting the IoT network such as "add now," "do not add," and "later."

Meanwhile, the user interface 300 may not include information for user authentication that identifies whether the target device 200 is a device of the user. In other words, in case it was identified that the target device 200 is located in the same space as the electronic apparatus 100 based on the context information and the information about the strength of the signal, an additional process for user authentication may not proceed.

Meanwhile, if the strength of the signal is smaller than the predetermined threshold value in S230-N, the electronic apparatus 100 may identify that the target device 200 is not in the same space as the electronic apparatus 100, and may not provide a user interface for constituting the IoT network (e.g., user interface 300).

In an embodiment, the user interface may be displayed on the display 120 of the electronic apparatus 100 in a form of a pop-up window. In an embodiment, the electronic apparatus 100 may provide a voice inquiring about whether to add the target device 200 as the device constituting the IoT network instead of the user interface.

In an embodiment, the user interface may be provided through the display of the target device 200 as well as the display 120 of the electronic apparatus 100. Specifically, if the context information is included in the signal received from the target device 200 and the strength of the received signal is greater than or equal to the predetermined threshold value, the electronic apparatus 100 may identify that the target device 200 is in the same space as the electronic apparatus 100, and transmit a request for providing a user interface for identification of the user to the target device 200.

The electronic apparatus 100 may determine whether a user input for adding the target device 200 as the device constituting the IoT network is received through the user interface 300 in S250. Then, when a user input is received in S250-Y, the electronic apparatus 100 may register the target device 200 as the device constituting the IoT network in S260.

For example, if "add now" is selected among the plurality of UI elements through the user interface 300 in FIG. 3, the electronic apparatus 100 may identify that a user input for adding the target device 200 as the device constituting the IoT network is received, and register the target device 200 as the device constituting the IoT network.

Meanwhile, if a user input is not received or another user input which is not a user input for adding the target device 200 as the device constituting the IoT network is received in S250-N, the electronic apparatus 100 may identify that the user does not want to add the target device 200 as the device constituting the IoT network, and may not register the target device 200 as the device constituting the IoT network.

For example, if "do not add" or "later" is selected among the plurality of UI elements through the user interface in FIG. 3, the electronic apparatus 100 may identify that the user does not want to add the target device 200 as the device constituting the IoT network, and may not provide register the target device 200 as the device constituting the IoT network.

Meanwhile, in case the user interface is provided through display of the target device 200, a user input may be input through the user interface displayed on the display of the target device 200, and the electronic apparatus 100 may receive a user input for adding the target device 200 as the device constituting the IoT network from the target device 200.

The electronic apparatus 100 may register the target device 200 as the device constituting the IoT network by controlling the communicator 110 to transmit information about the target device 200 to a server that provides a platform for the IoT. Other than the above, methods for registering the target device 200 may vary according to various methods for implementing a platform for the IoT, such as a case where the electronic apparatus 100 manages the IoT network.

According to the embodiments described above with reference to FIG. 1 to FIG. 3, the electronic apparatus 100 may register the target device 200 as the device constituting the IoT network based on satisfaction of conditions that the user is located near the target device 200, and the target device 200 is located in a close distance from the electronic apparatus 100.

Accordingly, the electronic apparatus 100 may register the target device 200 as the device constituting the IoT network by effectively identifying that the target device 200 is located in the same space as the electronic apparatus 100, while minimizing the user's inconvenience that is caused when an onboarding procedure proceeds in an unnecessary case.

Also, if it is identified that the target device 200 is located in the same space as the electronic apparatus 100, the electronic apparatus 100 may minimize a procedure of checking with the user whether to proceed with onboarding, and accordingly, the electronic apparatus 100 may noticeably reduce the possibility that onboarding may fail as the user inputs a wrong button.

Also, as the target device 200 may not broadcast signals for a registration request periodically, but may transmit a signal including a registration request and context information to the electronic apparatus 100 based on satisfaction of a condition that the user is located near the target device 200, unnecessary consumption of power may be prevented.

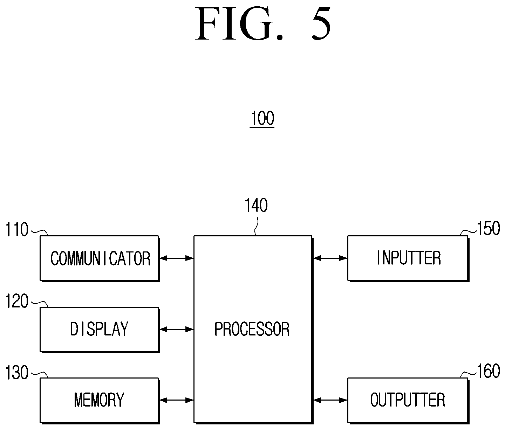

FIG. 4 is a block diagram schematically illustrating a configuration of the electronic apparatus 100 according to one or more embodiments of the disclosure, and FIG. 5 is a block diagram illustrating in detail a configuration of the electronic apparatus 100 according to one or more embodiments of the disclosure.

As illustrated in FIG. 4, the electronic apparatus 100 according to an embodiment of the disclosure includes a communicator 110, a display 120, memory 130, and a processor 140. Also, as illustrated in FIG. 5, the electronic apparatus 100 according to an embodiment of the disclosure may further include a sensor (not shown), an inputter 150, and an outputter 160. However, the components as illustrated in FIG. 4 and FIG. 5 are merely examples, and it is to be understood that in carrying out the disclosure, new components may be added in addition to the components as illustrated in FIG. 4 and FIG. 5 or some components may be omitted or replaced.

The display 120 may output an image by control by the processor 140. Specifically, the display 120 may output an image stored in advance in the memory 130 by control by the processor 140. The display 120 may be implemented as a liquid crystal display (LCD) panel, organic light emitting diodes (OLED), etc. Also, the display 120 may be implemented as a flexible display, a transparent display, etc. depending on embodiments. However, the display 120 according to the disclosure is not limited to specific types.

In particular, according to one or more embodiments, if a signal including a registration request and context information is received through the communicator 110, and the strength of the received signal is greater than or equal to a predetermined threshold value, the processor 140 may control the display 120 to provide a user interface.

The communicator 110 may include circuitry, and perform communication with external devices including the target device 200. Specifically, the processor 140 may receive various types of data or information from the target device 200 connected through the communicator 110, or transmit various types of data or information to the target device 200.

The communicator 110 may include at least one of a Wi-Fi module, a Bluetooth module, a wireless communication module, an NFC module, or an ultra-wide band (UWB) module. Specifically, a Wi-Fi module and a Bluetooth module may perform communication by a Wi-Fi method and a Bluetooth method, respectively. In the case of using a Wi-Fi module or a Bluetooth module, various types of connection information such as a service set identifier (SSID) may be transmitted and received first, and connection of communication may be performed by using the information, and various types of information may be transmitted and received thereafter.

Also, a wireless communication module may perform communication according to various communication protocols such as IEEE, Zigbee, 3^{rd} Generation (3G), 3^{rd} Generation Partnership Project (3GPP), Long Term Evolution (LTE), 5^{th} Generation (5G), etc. In addition, an NFC module may perform communication by a near field communication (NFC) method using a 13.56MHz band among various radio frequency identifier (RF-ID) frequency bands such as 135kHz, 13.56MHz, 433MHz, 860 - 960MHz, and 2.45GHz. Further, a UWB module may correctly measure a Time of Arrival (ToA) which is the time that a pulse reaches a target, and an Angle of Arrival (AoA) which is a pulse arrival angle in a transmission device through communication between UWB antennas, and accordingly, the UWB module may perform precise distance and location recognition in an error range of within scores of centimeters (cm) indoors.

In particular, according to one or more embodiments, the processor 140 may receive a signal including a registration request for adding the target device 200 as the device constituting the IoT network and context information indicating that a user is located near the target device 200 from the target device 200 through the communicator 110.

Also, the processor 140 may register the target device 200 as the device constituting the IoT network by controlling the communicator 110 to transmit information about the target device 200 to a server that provides a platform for the IoT.

Then, if the context information is included in the signal received from the target device 200 and the strength of the received signal is greater than or equal to a predetermined threshold value, the processor 140 may transmit a request for identification of the user to the target device 200.

In the memory 130, at least one instruction regarding the electronic apparatus 100 may be stored. Also, in the memory 130, an operating system (O/S) for operating the electronic apparatus 100 may be stored. In addition, in the memory 130, various types of software programs or applications for the electronic apparatus 100 to operate according to the various embodiments of the disclosure may be stored. Further, in the memory 130, semiconductor memory such as flash memory or a magnetic storage medium such as a hard disk may be included.

Specifically, in the memory 130, various types of software modules for the electronic apparatus 100 to operate according to the various embodiments of the disclosure may be stored, and the processor 140 may control the operations of the electronic apparatus 100 by executing the various types of software modules stored in the memory 130. In other words, the memory 130 may be accessed by the processor 140, and operations such as reading, recording, correction, deletion, and/or update, etc. of data by the processor 140 may be performed.

Meanwhile, in the disclosure, the term 'memory 130' may be used as a meaning including the memory 130, a read-only memory (ROM) and a random access memory (RAM) inside the processor 140, and/or a memory card (e.g., a micro secure digital (SD) card, a memory stick) mounted on the electronic apparatus 100.

In particular, according to one or more embodiments, in the memory 130, various types of information such as information about a signal including a registration request and context information, information about the strength of a signal, and information about the user interface, data, and/or signals, etc. may be stored.

Other than the above, various types of relevant information may be stored in the memory 130, and the information stored in the memory 130 may be updated as information is received from the target device 200 or is input by the user.

The processor 140 may control the overall operations of the electronic apparatus 100. Specifically, the processor 140 may be connected with the components of the electronic apparatus 100 including the communicator 110, the display 120, and the memory 130, and may control the overall operations of the electronic apparatus 100 by executing the at least one instruction stored in the memory 130 as described above.

The processor 140 may be implemented in various forms. For example, the processor 140 may be implemented as, for example but not limited to, at least one of an application specific integrated circuit (ASIC), an embedded processor, a microprocessor, a hardware control logic, a hardware finite state machine (FSM), or a digital signal processor (DSP). Meanwhile, in the disclosure, the term 'processor 140' may be used as a meaning including a central processing unit (CPU), a graphic processing unit (GPU), and a micro processor unit (MPU), etc.

In particular, according to one or more embodiments, the processor 140 may perform various processes for registering the target device 200 as a device constituting the IoT network.

According to one or more embodiments, the processor 140 may, if a signal including a registration request for adding the target device 200 as a device constituting an Internet of Things (IoT) network and context information indicating that a user is located near the target device 200 is received from the target device 200 through the communicator 110, obtain information about the strength of the signal, and if the strength of the signal is greater than or equal to a predetermined threshold value, control the display 120 to provide a user interface, and if a user input for adding the target device 200 as the device constituting the IoT network is received through the user interface, register the target device 200 as the device constituting the IoT network.

As other various embodiments based on control by the processor 140 are described above with reference to FIG. 1 to FIG. 3, overlapping explanation regarding the same content will be omitted. In other words, various embodiments regarding the method for controlling the electronic apparatus 100 described above with reference to FIG. 1 to FIG. 3 may be implemented through the processor 140 of the electronic apparatus 100.

The inputter 150 may include circuitry, and the processor 140 may receive a user command for controlling the operations of the electronic apparatus 100 through the inputter 150. Specifically, the inputter 150 may include components such as a microphone, a camera, and a remote control signal receiver, etc. Also, the inputter 150 may be implemented in a form of being included in the display 120 as a touch screen. In particular, the microphone may receive a voice signal, and convert the received voice signal into an electric signal.

In particular, according to one or more embodiments, the processor 140 may receive a user input for adding the target device 200 as the device constituting the IoT network in a form of a voice signal through the microphone. In the case of receiving a user input in a form of a voice signal, the processor 140 may obtain a text corresponding to the voice signal by using a trained artificial intelligence model, e.g., an automatic speech recognition (ASR) model, and identify a user input corresponding to the obtained text.

According to one or more embodiments, the processor 140 may obtain an image for the target device 200 and/or the user through the camera. For example, the processor 140 may identify that the user is located near the target device 200 based on the context information, but may also identify that the user is located near the target device 200 by using an image for the user solely or additionally. Also, the processor 140 may identify that the target device 200 is located in a close distance from the electronic apparatus 100 based on the information about the strength of a signal, but may also identify that the target device 200 is located in a close distance from the electronic apparatus 100 by using an image for the target device 200 solely or additionally.

The outputter 160 may include circuitry, and the processor 140 may output various functions that may be performed by the electronic apparatus 100 through the outputter 160. Also, the outputter 160 may include at least one of the display 120, a speaker, or an indicator. As the display 120 has been described above, overlapping explanation regarding the same content will be omitted. The speaker may output audio data by control by the processor 140, and the indicator may be turned on by control by the processor 140.

In particular, according to one or more embodiments, the processor 140 may control the speaker to output a voice inquiring about whether to add the target device 200 as the device constituting the IoT network instead of the user interface or together with the user interface.

Meanwhile, the method for controlling the electronic apparatus 100 according to the aforementioned embodiment may be implemented as a program and provided to the electronic apparatus 100. In particular, a program including the method for controlling the electronic apparatus 100 may be provided while being stored in a non-transitory computer-readable medium.

Specifically, in a non-transitory computer-readable recording medium including a program for executing the method for controlling the electronic apparatus 100, the method for controlling the electronic apparatus 100 may include operations of receiving a signal including a registration request for adding the target device 200 as a device constituting an Internet of Things (IoT) network and context information indicating that a user is located near the target device 200 from the target device 200, obtaining information about the strength of the signal, and based on the strength of the signal being greater than or equal to a predetermined threshold value, providing a user interface, receiving a user input for adding the target device 200 as the device constituting the IoT network through the user interface, and registering the target device 200 as the device constituting the IoT network.

While a method for controlling the electronic apparatus 100, and a computer-readable recording medium including a program for executing the method for controlling the electronic apparatus 100 have been explained briefly, this is only for omitting overlapping explanation, and the various embodiments regarding the electronic apparatus 100may be applied to the method for controlling the electronic apparatus 100, and a computer-readable recording medium including a program for executing the method for controlling the electronic apparatus 100.

Functions related to artificial intelligence according to the disclosure are operated through the processor 140 and the memory 130 of the electronic apparatus 100.

The processor 140 may include one or a plurality of processors 140. Here, the one or plurality of processors 140 may include at least one of a central processing unit (CPU), a graphic processing unit (GPU), or a neural processing unit (NPU), but is not limited to the aforementioned examples of the processor 140.

A CPU is a generic-purpose processor 140 that may perform not only general operations but also artificial intelligence operations, and the CPU may effectively execute a complex program through a multilayer cache structure. A CPU is advantageous for a serial processing method that enables a systemic linking between the previous calculation result and the next calculation result through sequential calculations. Meanwhile, the generic-purpose processor 140 is not limited to the aforementioned examples excluding cases wherein it is specified as the aforementioned CPU.

A GPU is a processor 140 for mass operations such as a floating point operation used for graphic processing, etc., and the GPU may perform mass operations in parallel by massively integrating cores. In particular, a GPU may be advantageous for a parallel processing method such as a convolution operation, etc. compared to a CPU. Also, a GPU may be used as a co-processor 140 for supplementing the function of a CPU. Meanwhile, the processor 140 for mass operations is not limited to the aforementioned examples excluding cases wherein it is specified as the aforementioned GPU.

An NPU is a processor 140 specialized for an artificial intelligence operation using an artificial neural network, and the NPU may implement each layer constituting an artificial neural network as hardware (e.g., silicon). Here, the NPU is designed to be specialized according to a required specification, and thus it has a lower degree of freedom compared to a CPU or a GPU, but the NPU may effectively process a required artificial intelligence operation. Meanwhile, as the processor 140 specialized for an artificial intelligence operation, an NPU may be implemented in various forms such as a tensor processing unit (TPU), an intelligence processing unit (IPU), a vision processing unit (VPU), etc. Meanwhile, the artificial intelligence processor 140 is not limited to the aforementioned examples excluding cases wherein it is specified as the aforementioned NPU.

Also, the one or plurality of processors 140 may be implemented as a system on chip (SoC). Here, in the SoC, the memory 130, and a network interface such as a bus for data communication between the processor 140 and the memory 130, etc. may be further included other than the one or plurality of processors 140.

In case the plurality of processors 140 are included in the system on chip (SoC) included in the electronic apparatus 100, the electronic apparatus 100 may perform an operation related to artificial intelligence (e.g., an operation related to learning or inference of the artificial intelligence model) by using some processors 140 among the plurality of processors 140. For example, the electronic apparatus 100 may perform an operation related to artificial intelligence by using at least one of a GPU, an NPU, a VPU, a TPU, or a hardware accelerator specialized for artificial intelligence operations such as a convolution operation, a matrix product operation, etc. among the plurality of processors 140. However, this is merely an example, and the electronic apparatus 100 may process an operation related to artificial intelligence by using the generic-purpose processor 140 such as a CPU, etc.

Also, the electronic apparatus 100 may perform operations regarding functions related to artificial intelligence by using a multicore (e.g., a dual core, a quad core, etc.) included in one processor 140. In particular, the electronic apparatus 100 may perform artificial intelligence operations such as a convolution operation, a matrix product operation, etc. in parallel by using the multicore included in the processor 140.

The one or plurality of processors 140 may perform control such that input data is processed according to pre-defined operation rules or an artificial intelligence model stored in the memory 130. The pre-defined operation rules or the artificial intelligence model are characterized in that they are made through learning.

Here, being made through learning means that predefined operation rules or an artificial intelligence model having desired characteristics are made by applying a learning algorithm to a plurality of training data. Such learning may be performed in a device itself wherein artificial intelligence is performed according to the disclosure, or through a separate server/system.

An artificial intelligence model may include a plurality of neural network layers. At least one layer has at least one weight value, and performs an operation of the layer through the operation result of the previous layer and at least one defined operation. As examples of a neural network, there are a convolutional neural network (CNN), a deep neural network (DNN), a recurrent neural network (RNN), a restricted Boltzmann Machine (RBM), a deep belief network (DBN), a bidirectional recurrent deep neural network (BRDNN), deep Q-networks, and a Transformer, but the neural network in the disclosure is not limited to the aforementioned examples excluding specified cases.

A learning algorithm is a method of training a specific subject device (e.g., a robot) by using a plurality of training data and thereby making the specific subject device make a decision or make prediction by itself. As examples of learning algorithms, there are supervised learning, unsupervised learning, semi-supervised learning, or reinforcement learning, but learning algorithms in the disclosure are not limited to the aforementioned examples excluding specified cases.

Meanwhile, a storage medium that is readable by machines may be provided in the form of a non-transitory storage medium. Here, the term 'a non-transitory storage medium' only means that the device is a tangible device, and does not include a signal (e.g.: an electromagnetic wave), and the term does not distinguish a case where data is stored semi-permanently in a storage medium and a case where data is stored temporarily. For example, 'a non-transitory storage medium' may include a buffer wherein data is temporarily stored.

Also, according to an embodiment, the method according to the various embodiments disclosed herein may be provided while being included in a computer program product. A computer program product refers to a product, and it may be traded between a seller and a buyer. A computer program product may be distributed in the form of a storage medium that is readable by machines (e.g.: compact disc read only memory (CD-ROM)), or distributed on-line (e.g.: download or upload) through an application store (e.g.: Play Store^{™}) or directly between two user devices (e.g.: smartphones). In the case of on-line distribution, at least a portion of a computer program product (e.g.: a downloadable app) may be stored in a storage medium such as the server of the manufacturer, the server of the application store, and the memory of the relay server at least temporarily, or may be generated temporarily.

In addition, each of the components (e.g.: a module or a program) according to the aforementioned various embodiments of the disclosure may include a singular object or a plurality of objects. Also, among the aforementioned corresponding sub components, some sub components may be omitted, or other sub components may be further included in the various embodiments. Alternatively or additionally, some components (e.g.: a module or a program) may be integrated as an object, and perform functions that were performed by each of the components before integration identically or in a similar manner.

Further, operations performed by a module, a program, or other components according to the various embodiments may be executed sequentially, in parallel, repetitively, or heuristically. Or, at least some of the operations may be executed in a different order or omitted, or other operations may be added.

Meanwhile, the term "part" or "module" used in the disclosure may include hardware, software, and/or firmware, and may be interchangeably used with, for example, terms such as a logic, a logical block, a component, or a circuit. In addition, "a part" or "a module" may be a component constituted as an integrated body or a minimum unit or a part thereof performing one or more functions. For example, a module may be constituted as an application-specific integrated circuit (ASIC).

Also, the various embodiments of the disclosure may be implemented as software including instructions stored in machine-readable storage media, which may be read by machines (e.g.: computers). The machines refer to devices that call instructions stored in a storage medium, and may operate according to the called instructions, and the devices may include an electronic apparatus according to the aforementioned embodiments (e.g.: the electronic apparatus 100).

In case an instruction is executed by a processor, the processor may perform a function corresponding to the instruction by itself, or by using other components under its control. An instruction may include a code that is generated or executed by a compiler or an interpreter.

Also, while example embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An electronic apparatus comprising:
a communicator;
a display;
memory storing at least one instruction; and
a processor configured to execute the at least one instruction,
wherein the processor is configured to:
based on receiving, from a target device through the communicator, a signal including a registration request and context information indicating that a user is located near the target device, obtain information about a strength of the signal;
based on the strength of the signal being greater than or equal to a predetermined threshold value, control the display to provide a user interface; and
based on receiving a user input to add the target device as a device constituting the IoT network through the user interface, register the target device as the device constituting the IoT network.

2. The electronic apparatus of claim 1, wherein the processor is configured to receive the signal from the target device based on the context information being obtained by the target device.

3. The electronic apparatus of claim 1, wherein the electronic apparatus is registered in advance as the device constituting the IoT network.

4. The electronic apparatus of claim 1, wherein the processor is configured to receive the signal from the target device based on at least one of detecting that the user is located near the target device at the target device or a user input for controlling the target device being received at the target device.

5. The electronic apparatus of claim 4, wherein the user input for controlling the target device being received at the target device comprises at least one of a user input of inputting a button included in the target device being received, a voice command of the user being received through a microphone included in the target device, or a control command for controlling the target device being received from a remote control device for controlling the target device through a communicator included in the target device.

6. The electronic apparatus of claim 4, wherein the detecting that the user is located near the target device at the target device comprises at least one of sensing information indicating an existence of the user being obtained through a sensor included in the target device or a sound indicating the existence of the user being received through a microphone included in the target device.

7. The electronic apparatus of claim 1, wherein the user interface comprises at least one of information for identifying the target device, a guide message for inquiring about whether to add the target device as the device constituting the IoT network, and at least one UI element for the user to select whether to add the target device as the device constituting the IoT network.

8. A method for controlling an electronic apparatus, the method comprising:
receiving, from a target device, a signal including a registration request and context information indicating that a user is located near the target device;
obtaining information about a strength of the signal;
based on the strength of the signal being greater than or equal to a predetermined threshold value, providing a user interface;
receiving a user input to add the target device as a device constituting the IoT network through the user interface; and
registering the target device as the device constituting the IoT network.

9. The method of claim 8, wherein the receiving the signal comprises receiving the signal from the target device based on the context information being obtained by the target device.

10. The method of claim 8, wherein the electronic apparatus is registered in advance as the device constituting the IoT network.

11. The method of claim 8, wherein the receiving the signal comprises receiving the signal based on at least one of detecting that the user is located near the target device at the target device or a user input for controlling the target device being received at the target device.

12. The method of claim 11, wherein the user input for controlling the target device being received at the target device comprises at least one of a user input of inputting a button included in the target device being received, a voice command of the user being received through a microphone included in the target device, or a control command for controlling the target device being received from a remote control device for controlling the target device through a communicator included in the target device.

13. The method of claim 11, wherein the detecting that the user is located near the target device at the target device comprises at least one of sensing information indicating an existence of the user being obtained through a sensor included in the target device or a sound indicating the existence of the user being received through a microphone included in the target device.

14. The method of claim 8, wherein the user interface comprises at least one of information for identifying the target device, a guide message for inquiring about whether to add the target device as the device constituting the IoT network, and at least one UI element for the user to select whether to add the target device as the device constituting the IoT network.

15. A non-transitory computer-readable recording medium storing a program executable by at least one processor to perform:
receiving, from a target device, a signal including a registration request and context information indicating that a user is located near the target device;
obtaining information about a strength of the signal;
based on the strength of the signal being greater than or equal to a predetermined threshold value, providing a user interface;
receiving a user input to add the target device as a device constituting the IoT network through the user interface; and
registering the target device as the device constituting the IoT network.
